# EUROPEAN PATENT APPLICATION

(11) **EP 1 484 129 A1**
(43) Date of publication of application: **08.12.2004**
(21) Application number: 04013054.4
(22) Date of filing: 02.06.2004
(51) Int. Cl.: B23K 11/16, B23K 11/24

(54) **Resistance welding method and resistance welding apparatus**

(30) Priority: 03.06.2003 JP 2003158225
(71) Applicant: Denso Corporation, Kariya-city, Aichi-pref., 448-8661 (JP)
(72) Inventor: Kondo, Jun, c/o Intellectual Property Center, Kariya-city Aichi-pref. 448-8661 (JP); Ohmi, Yoshinori, c/o Intellectual Property Center, Kariya-city Aichi-pref. 448-8661 (JP); Yamamoto, Akiyoshi, c/o Intell. Property Center, Kariya-city Aichi-pref. 448-8661 (JP)
(74) Representative: Leson, Thomas Johannes Alois, Dipl.-Ing.

(57) **Abstract**

A resistance welding method preventing a bonded part raised once to a high temperature from being cooled to a martensite phase in texture when bonding carbon steel having a carbon content of at least that of medium carbon steel by resistance welding and as a result preventing a drop in toughness and embrittlement of the bonded part, cracking of the bonded part, and aging cracks, comprising running a current through a common rail unit and holder formed by carbon steel having a carbon content of 0.35 wt% to bond the clamped parts and controlling the current run through the common rail unit and holder and current carrying time to slowly cool the bonded part raised to a high temperature for annealing treatment, whereby the Vicker's hardness can be lowered to less than 600 HV and the majority of the texture of the bonded part can be made the medium stage phase.

## Description

### BACKGROUND OF THE INVENTION

### 1. Field of the Invention

The present invention relates to a resistance welding method and resistance welding apparatus for bonding two metal members by resistance welding, more particularly relates to a resistance welding method and resistance welding apparatus used when at least one of the two metal members is a carbon steel having a carbon content of at least that of medium carbon steel. Note that "medium carbon steel" is carbon steel with a carbon content of 0.15 wt% to 0.3 wt%, while "high carbon steel" is carbon steel with a carbon content of more than 0.3 wt%.

### 2. Description of the Related Art

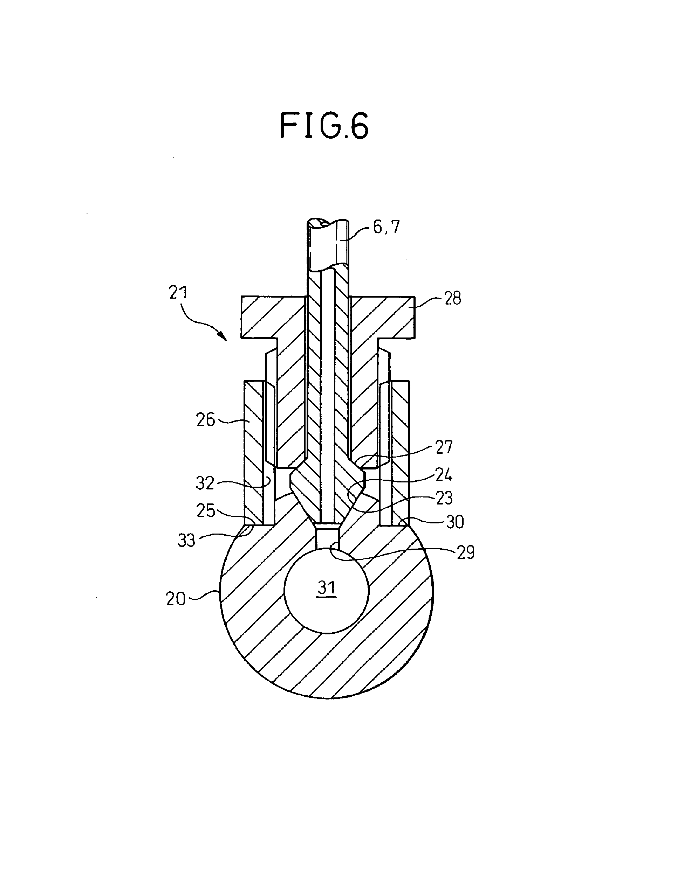

As an example of the related art, an explanation will be given using the bonded locations of a common rail unit. A common rail unit, as shown in FIG. 6, is provided with a common rail 20 for storing high pressure fuel and pipe joints 21 for connecting with pipes (high pressure pump pipe 6, injector pipes 7, etc.) The pipe joint 21 shown in FIG. 6 presses a conical part 23 formed at the front end of the pipe against a conically tapered pressure receiving face 24 formed at the common rail unit 20 to secure the seal (oil tight) of the pipe bonded location and is provided with a fastening means for pressing the conical part 23 of the pipe (6, 7, etc.) against the pressure receiving face 24 of the common rail unit 20.

This fastening means is comprised of a holder 26 (fixing screw member) strongly bonded with a flat part 25 formed around the pressure receiving face 24 of the unit and a pipe fastening screw 28 screwed into the holder 26 in the state engaged with a step 27 at the back of the conical part 23. The common rail unit 20 is required to have a superhigh pressure resistance, so has to be formed from a material of a hardness of at least that of medium carbon steel.

On the other hand, resistance welding is known as a technique for bonding two metal members. Resistance welding is a technique for clamping together two metal members, running a current through the two metal members in that state, and bonding the two metal members by partially melting them once or making them plastically deform. As a technique for bonding carbon steel containing carbon by resistance welding, there is known the technique of running a current through metal members containing carbon so as to bond the two, then sharply reducing (within one second) the current flowing through the two metal members (for example, see Japanese Unexamined Patent Publication (Kokai) No. 4-147773 (page 3, top right column, line 20 to bottom right column, line 1)).

Summarizing the problems to be solved by the invention, when bonding carbon steel (metal members) having a carbon content of at least that of medium carbon steel, a bonded part raised once to a high temperature is cooled and forms a martensite phase in texture. As a result, the hardness of the bonded part becomes harder than a Vicker's hardness of 600 HV. Further, even when rapidly (within 1 second) lowering the current run through the two metal members as described in Japanese Unexamined Patent Publication (Kokai) No. 4-147773, in the same way as general resistance welding, since the part raised once to a high temperature is cooled in a short time, the texture of the bonded part becomes a martensite phase and the hardness of the bonded part becomes harder than a Vicker's hardness of 600 HV. This being the case, the bonded part falls in toughness and becomes brittle, the bonded part cracks, and aging cracks occur. In a specific example, if bonding the medium carbon steel common rail unit 20 and a holder 26 by the existing resistance welding technology, the bonded part 30 of the common rail unit 20 and holder 26 becomes brittle, the bonded part 30 cracks, and aging cracks occur.

### SUMMARY OF THE INVENTION

An object of the present invention is to provide a resistance welding method and resistance welding apparatus preventing a bonded part raised once to a high temperature from being cooled to a martensite phase in texture when bonding carbon steel having a carbon content of at least that of medium carbon steel by resistance welding and as a result preventing a drop in toughness and embrittlement of the bonded part, cracking of the bonded part, and aging cracks.

To attain the above object, according to a first aspect of the invention, there is provided a resistance welding method consisting of clamping together two metal members and running a current through the two metal members in that state so as to bond the clamped parts of the two metal members, comprising, when at least one of the two metal members is a carbon steel having a carbon content of at least a medium carbon steel, running current through the two metal members to bond the clamped parts, then lowering the current run through the two metal members step by step and controlling the current-carrying time so as to gradually cool the bonded part made high in temperature due to the bonding for annealing treatment.

To attain the above object, according to a second aspect of the invention, there is provided a resistance welding apparatus having electrodes clamping two metal members and running a current through the electrodes through the two metal members so as to bond the clamped parts of the two metal members, comprising, a current control device for running current through the two metal members to bond the clamped parts, then lowering the current run through the two metal members step by step and controlling the current-carrying time so as to gradually cool the bonded part made high in temperature due to the bonding for annealing treatment when at least one of the two metal members is a carbon steel having a carbon content of at least a medium carbon steel.

Preferably, the method or apparatus further comprises performing the annealing treatment for lowering the current run through the two metal members at least once, then holding the current-carrying time at least 200 ms so as to gradually cool the bonded part made high in temperature due to the bonding.

More preferably, the annealing treatment is treatment for lowering the current run through the two metal members step by step and controlling the current-carrying time so as to suppress a hardness of the bonded part to a Vicker's hardness of lower than 200 HV.

Still more preferably, the annealing treatment is treatment for lowering the current run through the two metal members step by step and controlling the current-carrying time so as to make the texture of the bonded part an intermediate stage phase.

The method or apparatus may further comprise continuously variably reducing the current run through the two metal members during the annealing treatment.

Preferably, one of the metal members is a common rail unit comprised of a carbon steel having a carbon content of at least that of medium carbon steel storing high pressure fuel inside it, and the other of the metal members is a holder of a pipe joint for connecting a pipe to the common rail unit.

### BRIEF DESCRIPTION OF THE DRAWINGS

These and other objects and features of the present invention will become clearer from the following description of a preferred embodiment given with reference to the attached drawings, wherein:
FIG. 1 is a graph of temperature changes at a bonded part;
FIG. 2 is a graph of the relationship between a current carrying pattern and hardness of a bonded part;
FIG. 3(a) is a cross-sectional view of a common rail unit and a holder, while FIG. 3(b) is a partially enlarged view of the same;
FIG. 4 is a cross-sectional view of the state of clamping the common rail unit and holder by two electrodes;
FIG. 5 is a view of the system configuration of a pressure storage* type fuel injection system; and
FIG. 6 is cross-sectional view of a pipe joint.

### DESCRIPTION OF THE PREFERRED EMBODIMENTS

The resistance welding method according to the first aspect of the invention consists of running a current through two metal members to bond the clamped parts, then lowering the current run through the two metal members step by step and controlling the current-carrying time so as to gradually cool the temperature bonded part made high in temperature right after the bonding for annealing treatment. Since the bonded part raised once to a high temperature is slowly cooled by the step by step reduction of the current and control of the current-carrying time, the hardness of the once high temperature bonded part is suppressed. Due to this, the toughness of the bonded part is raised and cracking of the bonded part and aging cracking can be prevented.

The resistance welding apparatus according to the second aspect of the invention runs a current through two metal members to bond the clamped parts, then lowers the current run through the two metal members step by step and controls the current-carrying time so as to gradually cool the temperature bonded part made high in temperature right after the bonding for annealing treatment. Since the bonded part raised once to a high temperature is slowly cooled by the step by step reduction of the current and control of the current-carrying time, the hardness of the once high temperature bonded part is suppressed. Due to this, the toughness of the bonded part is raised and cracking of the bonded part and aging cracks can be prevented.

The annealing treatment may comprise lowering the current run through the two metal members at least once, then holding the current-carrying time at least 200 ms so as to gradually cool the bonded part made high in temperature due to the bonding. Since the once high temperature bonded part is further gradually cooled by lowering the current at least once, then holding the current-carrying time at more than 200 ms, the hardness of the once high temperature bonded part can be kept down sufficiently. Due to this, the toughness of the bonded part is further raised and almost all cracking of the bonded part and aging cracks can be prevented.

The annealing treatment may be treatment for lowering the current run through the two metal members step by step and controlling the current-carrying time so as to suppress a hardness of the bonded part to a Vicker's hardness of lower than 200 HV. By suppressing the hardness of the bonded part to a Vicker's hardness of lower than 200 HV, the toughness of the bonded part is raised and cracking of the bonded part and aging cracks can be prevented.

The annealing treatment may be treatment for lowering the current run through the two metal members step by step and controlling the current-carrying time so as to make the texture of the bonded part an intermediate stage phase. By making the texture at the once high temperature part an intermediate stage phase, the bonded part becomes softer than the martensite phase, so the toughness of the bonded part is raised and cracking of the bonded part and aging cracks can be prevented. Note that the "texture" means an intermediate texture between the ferrite phase texture and the martensite phase texture.

This annealing treatment may further be treatment comprising continuously variably reducing the current run through the two metal members. By variably reducing the current in the annealing treatment, it is possible to control the speed of cooling of the bonded part during the annealing.

One of the metal members may be a common rail unit comprised of a carbon steel having a carbon content of at least that of medium carbon steel and storing high pressure fuel inside it, and the other of the metal members may be a holder of a pipe joint for connecting a pipe to the common rail unit. By applying the present invention to bonding a common rail unit and holder, cracking of the bonded part of the common rail unit and holder and aging cracks may be prevented.

A preferred embodiment of the present invention will be described in detail below while referring to the attached figures.

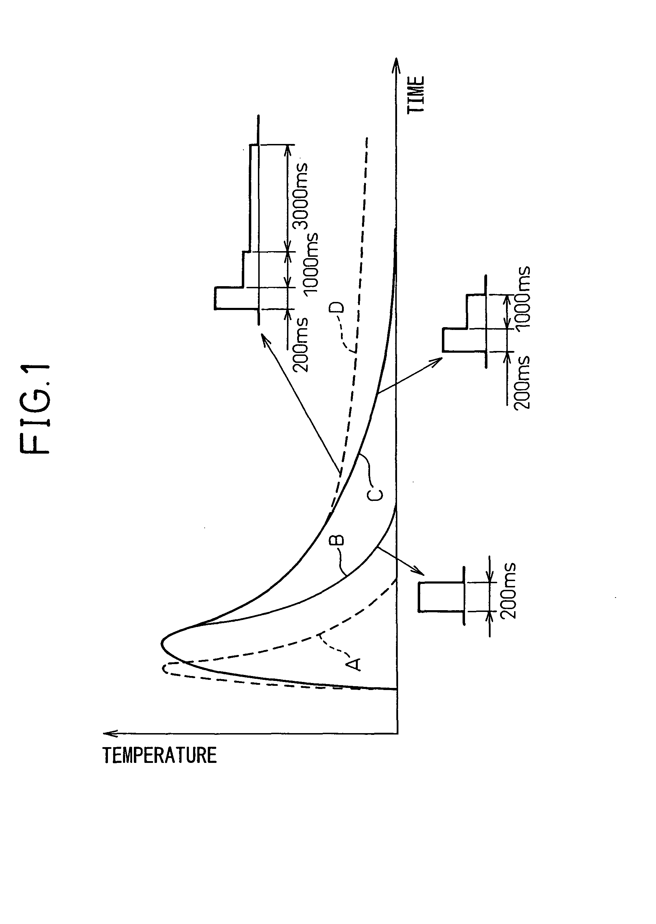

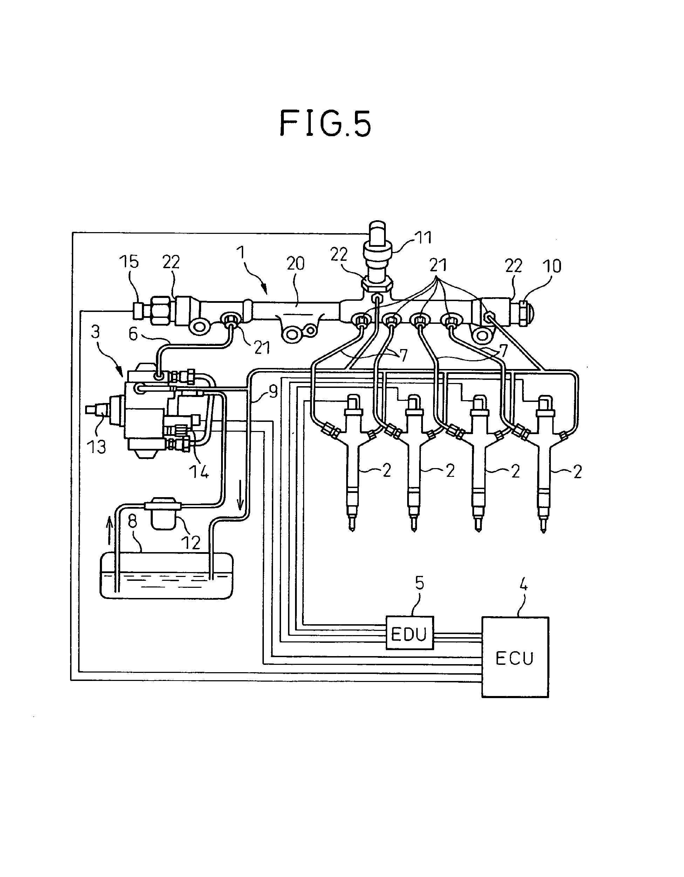

In the embodiment, first, the system configuration of a pressure storing type fuel injection system will be explained with reference to FIG. 5, the structure of a pipe joint will be explained with reference to FIG. 6, then a welding method to which the present invention is applied will be explained with reference to FIG. 1 to FIG. 4.

The pressure storing type fuel injection system shown in FIG. 5 injects fuel to a two- to three-liter displacement engine (for example, a four-cylinder to eight-cylinder diesel engine, not shown) and is comprised of a common rail 1, injectors 2, supply pump 3, engine control unit (ECU) 4, and engine drive unit (EDU) 5.

The common rail 1 is a pressure storing vessel for storing high pressure fuel supplied to the injectors 2. It is connected to a discharge port of the supply pump 3 supplying high pressure fuel through a high pressure pump pipe 6 so that a common rail pressure corresponding to the fuel injection pressure is stored and is connected to a plurality of injector pipes 7 supplying high pressure fuel to the injectors 2. Note that details of the connection structure between the common rail 1 and the high pressure pump pipe 6 and the connection structure between the common rail 1 and the injector pipes 7 will be given later.

A relief pipe 9 for returning fuel from the common rail 1 to a fuel tank 8 has a pressure limiter 10 attached to it. The pressure limiter 10 is a pressure safety valve. It opens when the fuel pressure in the common rail 1 exceeds the limit pressure setting to keep the fuel pressure of the common rail 1 below the limit setting. Further, the common rail 1 has a pressure reducing valve 11 attached to it. This pressure reducing valve 11 opens by an opening instruction signal given from the ECU 4 to rapidly reduce the common rail pressure through the relief pipe 9. By mounting the pressure reducing valve 11 in the common rail 1, the ECU 4 can quickly reduce the common rail pressure to a pressure in accordance with the vehicle running state.

The injectors 2 are mounted in cylinders of the engine and inject and supply fuel to the cylinders. They are connected to bottom ends of the plurality of injector pipes 7 branched from the common rail 1 and mount fuel injection nozzles for injecting and supplying the cylinders with the high pressure fuel stored in the common rail 1 and solenoid valves for lift control of the needles housed in the fuel injection nozzles. Note that fuel leaks from the injectors 2 are returned to the fuel tank 8 through the relief pipe 9.

The supply pump 3 is a high pressure fuel pump for supplying high pressure fuel to the common rail 1. It mounts a feed pump for sucking fuel in the fuel tank 8 through a filter 12 to the supply pump 3 and compresses the fuel sucked in by the feed pump to a high pressure to supply it to the common rail 1 under pressure. The feed pump and supply pump 3 are driven by a common cam shaft 13. Note that the cam shaft 13 is driven to rotate by the engine.

The supply pump 3 is provided with a suction control valve (SCV) 14 for adjusting the opening degree of the fuel passage guiding the fuel into the pressurizing chamber pressurizing the fuel to a high level. The SCV 14 is controlled by a pump drive signal from the ECU 4 so as to adjust the intake of fuel into the pressurizing chamber and changing the discharge of fuel supplied to the common rail 1. By adjusting the discharge of fuel supplied to the common rail 1, it adjusts the common rail pressure. That is, the ECU 4 can control the SCV 14 so as to control the common rail pressure to a pressure in accordance with the vehicle running state.

The ECU 4 mounts a microprocessor (CPU), random access memory (RAM), read only memory (ROM), etc. (not shown) and performs various types of processing based on programs stored in the ROM and signals of sensors read into the RAM (vehicle operating state).

Giving a specific example of the computation, the ECU 4 is provided so as to determine the target injection amounts, injection modes, and opening/closing timings of the injectors 2 of the cylinders based on the programs stored in the ROM and the signals of the sensors read in the RAM (vehicle operating state).

The EDU 5 is a drive circuit for giving an opening drive current to the solenoid valves of the injectors 2 based on an injector opening signal given from the ECU 4. By giving an opening drive current to the solenoid valves, high pressure fuel is injected and supplied to the cylinders. By stopping the opening drive current, fuel injection is stopped.

Note that the ECU 4 is a means for detecting the engine operating state etc. In addition to the pressure sensor 15 for detecting the common rail pressure, it has an accelerator sensor for detecting the accelerator opening degree, a speed sensor for detecting the engine speed, a water temperature sensor for detecting the engine cooling water temperature, and other sensors connected to it.

### Explanation of Pipe Joint

The common rail 1 is provided with a plurality of pipe joints 21 for connecting the high pressure pump pipe 6, the injector pipes 7, etc. to the common rail unit 20 exhibiting a pipe shape and storing superhigh pressure fuel inside. Further, the common rail unit 20 is provided with, in addition to the pipe joints 21, a functional component joint 22 for mounting a pressure limiter 10, a pressure reducing valve 11, a pressure sensor 15, etc. Note that the common rail unit 20 need not be the one shown in FIG. 5. It may also be formed by an inexpensive pipe material having a large number of pipe joints 21 provided along its axial direction to try to reduce costs.

Each pipe joint 21, as shown in FIG. 6, is comprised of a pipe (high pressure pump pipe 6, injector pipe 7, etc.) at the front end of which is formed a conical part 23 which is pressed against a conically tapered pressure receiving face 24 formed at the common rail unit 20 so as to secure a seal (oil tight) at the pipe joint part. It is provided with a holder 26 (fixed screw member) to be bonded to a ring-shaped flat part 25 formed around the pressure receiving face 24 and a pipe fastening screw 28 to be screwed into the holder 26 in the state engaged with a step 27 at the back of the conical part 23. Note that the center bottom part of the pressure receiving face 24 is formed with an inside/outside through hole 29 passing through the common rail unit 20.

### Features of Embodiment

Next, the welding method and apparatus for the common rail unit 20 and holder 26 will be explained. The common rail unit 20 is required to have a superhigh pressure resistance, so is formed by carbon steel having a carbon content of at least that of medium carbon steel. Here, as explained above, if bonding carbon steel having a carbon content of at least that of medium carbon steel by general resistance welding, a bonded part 30 raised once to a high temperature (temperature exceeding the melting point) is cooled and the majority of the texture becomes the martensite phase, whereby the hardness of the bonded part 30 becomes greater than the Vicker's hardness 600 HV. That is, the bonded part 30 falls in toughness and becomes brittle, the bonded part 30 cracks, and aging cracks (delayed fracture) occur.

In the existing resistance welding method, there are no clearly specified limits of occurrence of cracking for current-carrying patterns. Further, the correlation between the current-carrying patterns and the hardnesses of the bonded parts 30 obtained as a result has never been clarified. Therefore, the inventors ran tests of the cracking and hardness of bonded parts 30 for different current-carrying patterns using as test pieces the common rail unit 20 (one of two metal members) and a holder 26 (other of two metal members).

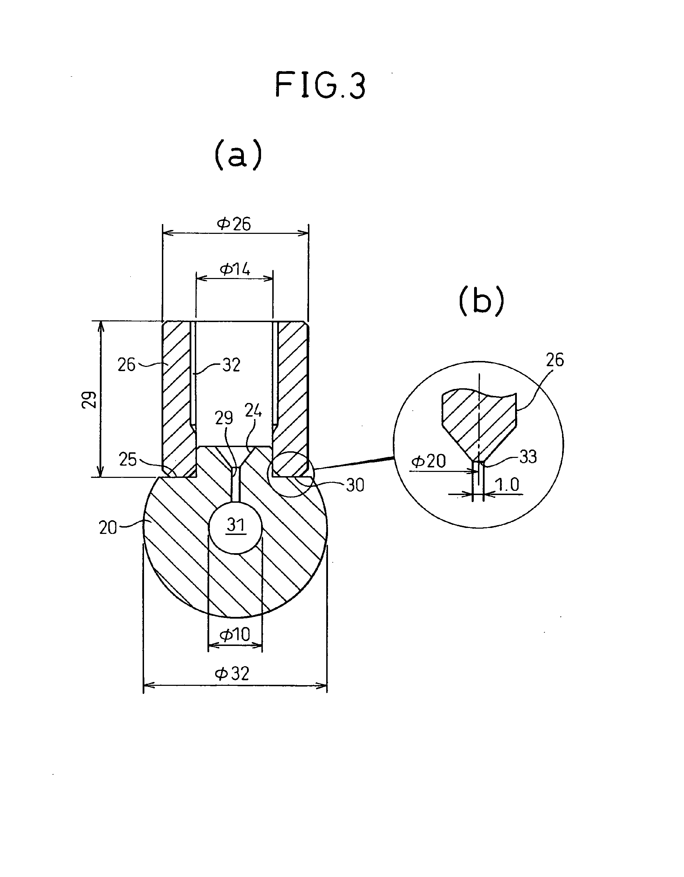

The common rail unit 20 and holder 26 used for the test pieces are both ones formed by carbon steel (SCM435) having a carbon content of 0.35 wt%. The shapes and dimensions of the parts of the common rail unit 20 and holder 26 used for the test pieces will be explained using FIG. 3(a).

The common rail unit 20 is one used for an engine having a displacement of two to three liters as explained above. This common rail unit 20 exhibits a tubular external shape. Its outside diameter dimension is set to a diameter of 32 mm, while its inside diameter dimension (inside diameter of pressure storing chamber 31) is set to 10 mm.

The holder 26 exhibits a cylindrical shape formed with a female thread 32 in the inside circumference. The outer diameter dimension is set to a diameter of 26 mm, while the inside diameter dimension is set to 14 mm. The length of the holder 26 (cylinder length) is 29 mm. The end of the holder 26 (part to be bonded to common rail unit 20), as shown in FIG. 3(b), has both an inside diameter and outside diameter tapered in shape. The front end face is provided with a ring-shaped holder flat part 33 matching with the flat part 25 of the common rail unit 20 at the time of resistance welding. The diameter dimension (inside diameter dimension) of the inside edge of the flat part 33 is set to 19.5 mm, while the dimension (outside diameter dimension) of the outer edge is set to 20.5 mm. That is, the width of the flat part 33 in the radial direction is set to 1 mm.

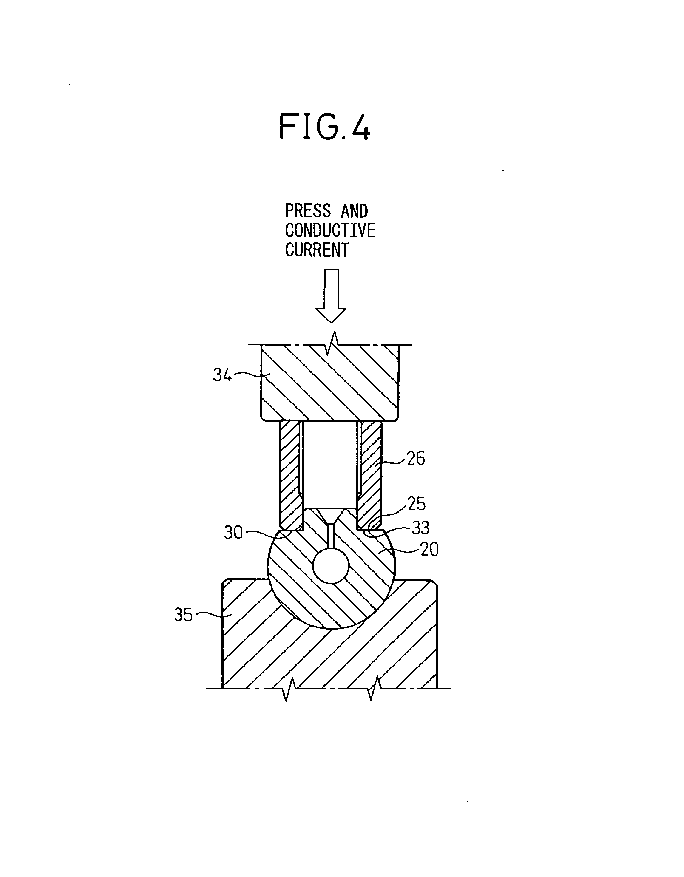

In the tests of the cracking and hardness of the bonded part 30 for current-carrying patterns using the common rail unit 20 and the holder 26 as test pieces, as shown in FIG. 4, the flat part 33 of the holder 26 is brought into abutment with the flat part 25 of the common rail unit 20. In that state, the electrodes 34 and 35 of the resistance welding machine are used to press together the common rail unit 20 and the holder 26 (whereby the flat part 25 of the common rail unit 20 and the flat part 33 of the holder 33 are clamped together). Current is then run across the two electrodes 34 and 35 to bond the clamped parts of the common rail unit 20 and the holder 26. Note that in this test, the pressing force by the two electrodes 34 and 35 is made constant (25 kN) and the current run through the two electrodes 34 and 35 and the current-carrying time (time for running current) are changed so as to study the cracking and hardness of the bonded part 30 for the current-carrying patterns.

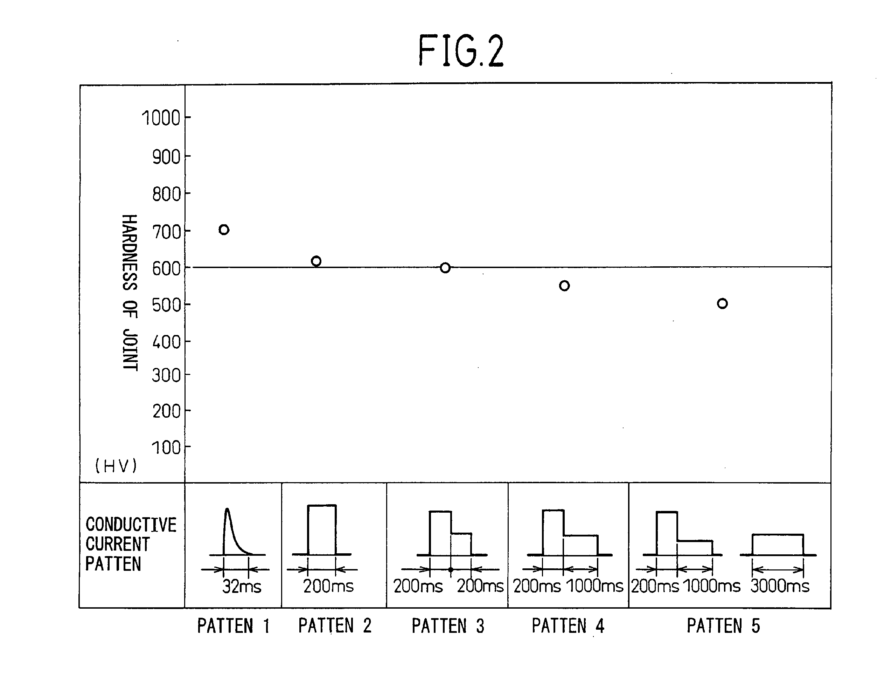

In the tests, as shown in FIG. 2, tests were run by five current-carrying patterns and the cracking and hardness of the bonded parts 30 were measured. Note that the current-carrying pattern 1 shown below uses a capacitor-type resistance welding machine, while the current-carrying patterns 2 to 5 use three-phase rectifier type resistance welding machines. The current-carrying pattern 1 shows the hardness of the bonded part 30 when running a test at a current of 86 kA and a current-carrying time of 32 ms. The current-carrying pattern 2 shows the hardness of the bonded part 30 when running a test at a current of 43 kA and a current-carrying time of 200 ms.

The currying-carrying patterns 1 and 2 are examples of running a current through the common rail unit 20 and holder 26 to melt the clamped parts in melting treatment alone. The bonded part 30 become high in temperature due to this melting treatment is robbed of heat by the common rail unit 20 and holder 26 and quickly cooled.

The current-carrying pattern 3 shows the hardness of the bonded part 30 when running a test at a current of 43 kA and a current-carrying time of 200 ms and then running it at a current of 32 kA and a current-carrying time of 200 ms. The current-carrying pattern 4 shows the hardness of the bonded part 30 when running a test at a current of 43 kA and a current-carrying time of 200 ms and then running it at a current of 14 kA and a current-carrying time of 1000 ms. The current-carrying pattern 5 shows the hardness of the bonded part 30 when running a test at a current of 43 kA and a current-carrying time of 200 ms, then running it at a current of 14 kA and a current-carrying time of 1000 ms, then running it at a current of 10 kA and a current-carrying time of 3000 ms.

The current-carrying patterns 3 to 5 are examples of running a current through the common rail unit 20 and holder 26 to melt the clamped parts in melting treatment, then controlling the current run through the common rail unit 20 and holder 26 and the current-carrying time to gradually cool the temperature of the bonded part 30 made high in temperature by this melting treatment for annealing treatment. The current-carrying pattern 5 is an example of variably reducing step by step the current running through the common rail unit 20 and holder 26 during the annealing treatment.

### Results of Study

The bonded parts 30 of the current-carrying patterns 1 to 5 were studied. With the current-carrying pattern 1, the current-carrying time was short and the heat impact due to the bonding was small, but the bonded part 30 cracked. The hardness of the bonded part 30 was measured, whereupon the Vicker's hardness was found to be an extremely high one of about 700 HV. This is believed because, as shown by the broken line A in FIG. 1, the once high temperature bonded part 30 is quickly cooled so that the majority of the texture becomes a martensite phase.

Even with the current-carrying pattern 2, the bonded part 30 did not crack. The hardness of the bonded part 30 was measured, whereupon the Vicker's hardness was found to be about 620 HV. With this hardness, the cracking could not be prevented. This is because, as shown by the solid line B in FIG. 1, the once high temperature bonded part 30 is quickly cooled so that the texture becomes a martensite phase. For confirmation, a test was run leaving the current-carrying time a constant 200 ms as it is but giving a low current (constant current) or high current (constant current) to check the occurrence of cracking at the bonded part 30.

Even with the current-carrying pattern 3, the bonded part 30 did not crack. The hardness of the bonded part 30 was measured, whereupon the Vicker's hardness was found to be about 600 HV. From the test results, it was confirmed that in the shapes and materials studied, cracks did not occur at a Vicker's hardness of the bonded part 30 of less than about 600 HV. The Vicker's hardness of the bonded part 30 is believed to soften to about 600 HV because the once high temperature bonded part 30 is gradually cooled so that the texture becomes one including an intermediate stage phase.

Even with the current-carrying pattern 4, the bonded part 30 did not crack. The hardness of the bonded part 30 was measured, whereupon the Vicker's hardness was found to be about 550 HV. The Vicker's hardness of the bonded part 30 is believed to soften to about 550 HV because, as shown by the solid line C in FIG. 1, the once high temperature bonded part 30 is gradually and gently cooled so that the texture becomes one including an intermediate stage phase.

Further, comparing the current-carrying pattern 3 and the current-carrying pattern 4, it is learned that by setting the current-carrying pattern in the annealing treatment long, it is possible to further soften the bonded part 30. Therefore, by setting the current-carrying time in the annealing treatment longer along with the increase in the carbon content, it is possible to keep the hardness of the bonded part 30 at below 600 HV, prevent a drop in toughness of the bonded part 30, and prevent the bonded part 30 from cracking.

Even with the current-carrying pattern 5, the bonded part 30 did not crack. The hardness of the bonded part 30 was measured, whereupon the Vicker's hardness was found to be about 500 HV. The Vicker's hardness of the bonded part 30 is believed to soften to about 500 HV because, as shown by the broken line D in FIG. 1, the once high temperature bonded part 30 is gradually and gently cooled so that the texture becomes one including an intermediate stage phase.

Further, from the current-carrying pattern 5, it is learned that by variably reducing step by step (or continuously) the current run through the annealing treatment, the range of control of the temperature of the gradually cooled bonded part 30 is expanded and the bonded part 30 can be further softened by control of the temperature of the gradually cooled bonded part 30. Therefore, by controlling the temperature of the gradually cooled bonded part 30 as the carbon content becomes higher, it is possible to keep the hardness of the bonded part 30 below 600 HV and prevent a drop in toughness of the bonded part 30 to prevent cracking of the bonded part 30.

As explained above, by running a current through the common rail unit 20 and holder 26 to bond the clamped parts and then controlling the current run through the common rail unit 20 and a holder 26 and the current-carrying time so as to gradually cool the once high temperature bonded part 30 for annealing, it is possible to make the Vicker's hardness of the bonded part 30 of the common rail unit 20 and holder 26 comprised of the carbon steel having a carbon content of at least that of medium carbon steel less than 600 HV and make the texture of the bonded part 30 a texture including an intermediate stage phase so as to thereby raise the toughness of the bonded part 30 and prevent cracking of the bonded part 30 and aging cracks. That is, by bonding the common rail 20 and holder 26 comprised of carbon steel having a carbon content of at least that of medium carbon steel by the resistance welding method of the present invention, it is possible to prevent cracking of the bonded part 30 of the common rail unit 20 and the holder 26 and aging cracks.

Therefore, the resistance welding apparatus for clamping the common rail unit 20 and a holder 26 between the electrodes 34 and 35 and running the current through the common rail unit 20 and holder 26 through the electrodes 34 and 35 so as to bond the clamped parts of the common rail unit 20 and the holder 26 mounts a current control device (not shown) able to control the current running through the common rail unit 20 and the holder 26 and the current-carrying time so the above current-carrying patterns 3 to 5 so as to gradually cool the temperature of the bonded part 30 made high in temperature at the time of bonding for annealing treatment. Further, this resistance welding apparatus bonds the common rail unit 20 and holder 26 comprised of carbon steel having a carbon content of at least the medium carbon steel and gradually cools the temperature of the bonded part 30 made high in temperature once by the annealing treatment by the current control device so as to prevent cracking of the bonded part 30 of the common rail unit 20 and holder 26 and aging cracks.

### Modifications

The pipe joint 21 shown in the above embodiment is an example for explaining the embodiment. The present invention may also be applied to bonding of the common rail unit 20 and a holder 26 of a pipe joint 21 of another structure. In the above embodiment, the example of application of the resistance welding method of the present invention to bonding a common rail unit 20 and holder 26 was shown, but the resistance welding method of the present invention may also be applied to bonding a part different from the holder 26 (for example, rail mounting stay etc.) and common rail unit 20. Further, when at least one of the two metal members to be bonded is made of carbon steel having a carbon content of at least that of medium carbon steel, the resistance welding method of the present invention may also be applied outside of the common rail unit 20.

In the above embodiment, the example was shown of changing step by step the current running through the two metal members (in this embodiment, common rail unit 20 and holder 26), but it is also possible to use an inverter resistance welding machine able to change the current continuously to continuously variably reduce the current run through the two metal members. Further, it is also possible to interrupt the current given to the two metal members (in this embodiment, common rail unit 20 and holder 26) in the above annealing treatment to gradually cool the temperature of the bonded part 30. The numerical figures, shapes, etc. shown above are examples for explanation of the embodiment. The present invention is not limited to the numerical figures, shapes, etc. shown in the embodiment. The invention may be suitably changed in accordance with the shape, size, etc. of the two metal members bonded by resistance welding.

A resistance welding method preventing a bonded part raised once to a high temperature from being cooled to a martensite phase in texture when bonding carbon steel having a carbon content of at least that of medium carbon steel by resistance welding and as a result preventing a drop in toughness and embrittlement of the bonded part, cracking of the bonded part, and aging cracks, comprising running a current through a common rail unit and holder formed by carbon steel having a carbon content of 0.35 wt% to bond the clamped parts and controlling the current run through the common rail unit and holder and current carrying time to slowly cool the bonded part raised to a high temperature for annealing treatment, whereby the Vicker's hardness can be lowered to less than 600 HV and the majority of the texture of the bonded part can be made the medium stage phase.

## Claims

1. A resistance welding method consisting of clamping together two metal members and running a current through said two metal members in that state so as to bond the clamped parts of said two metal members, comprising,
when at least one of said two metal members is a carbon steel having a carbon content of at least a medium carbon steel,
running a current through said two metal members to bond said clamped parts, then lowering the current run through said two metal members step by step and controlling the current-carrying time so as to gradually cool the bonded part made high in temperature due to the bonding for annealing treatment.

2. A method as set forth in claim 1, further comprising performing lowering the current run through said two metal members at least once, then holding the current-carrying time at least 200 ms so as to gradually cool the bonded part made high in temperature due to the bonding for annealing treatment.

3. A method as set forth in claim 1 or 2, wherein said annealing treatment is treatment for lowering the current run through said two metal members step by step and controlling the current-carrying time so as to suppress a hardness of said bonded part to a Vicker's hardness of lower than 200 HV.

4. A method as set forth in any one of claims 1 to 3, wherein said annealing treatment is treatment for lowering the current run through said two metal members step by step and controlling the current-carrying time so as to make the texture of said bonded part an intermediate stage phase.

5. A method as set forth in any one of claims 1, 3, and 4, further comprising continuously variably reducing the current run through said two metal members during said annealing treatment.

6. A method as set forth in any one of claims 1 to 5, wherein:
one of said metal members is a common rail unit comprised of carbon steel having a carbon content of at least that of medium carbon steel and storing high pressure fuel inside it, and
the other of said metal members is a holder of a pipe joint for connecting a pipe to said common rail unit.

7. A resistance welding apparatus having electrodes clamping two metal members and running a current through said electrodes through said two metal members so as to bond the clamped parts of said two metal members, comprising,
a current control device running current through said two metal members to bond said clamped parts, then lowering the current run through said two metal members step by step and controlling the current-carrying time so as to gradually cool the bonded part made high in temperature due to the bonding for annealing treatment when at least one of said two metal members is a carbon steel having a carbon content of at least a medium carbon steel.

8. An apparatus as set forth in claim 7, further comprising performing lowering the current run through said two metal members at least once, then holding the current-carrying time at least 200 ms so as to gradually cool the bonded part made high in temperature due to the bonding for annealing treatment.

9. An apparatus as set forth in claim 7 or 8, wherein said annealing treatment is treatment for lowering the current run through said two metal members step by step and controlling the current-carrying time so as to suppress a hardness of said bonded part to a Vicker's hardness of lower than 200 HV.

10. An apparatus as set forth in any one of claims 7 to 9, wherein said annealing treatment is treatment for lowering the current run through said two metal members step by step and controlling the current-carrying time so as to make the texture of said bonded part an intermediate stage phase.

11. An apparatus as set forth in any one of claims 7, 9, and 10, wherein the current run through said two metal members during said annealing treatment is continuously changed and reduced.

12. An apparatus as set forth in any one of claims 7 to 11, wherein:
one of said metal members is a common rail unit comprised of carbon steel having a carbon content of at least that of medium carbon steel storing high pressure fuel inside it, and
the other of said metal members is a holder of a pipe joint for connecting a pipe to said common rail unit.
